# EUROPÄISCHE PATENTSCHRIFT

(11) **EP 1 984 250 B1**
(45) Veröffentlichungstag und Bekanntmachung des Hinweises auf die Patenterteilung: **21.10.2009**
(21) Anmeldenummer: 07703367.8
(22) Anmeldetag: 08.02.2007
(51) Int. Cl.: B65B 9/04, B65D 77/20

(54) **VERPACKUNGSMASCHINE FÜR DIE HERSTELLUNG EINER VERPACKUNG MIT EINEM RÜCKSPRUNG IN DEM VERPACKUNGSMULDENRAND**
PACKAGING MACHINE FOR THE PRODUCTION OF A PACKAGING HAVING A RECESS IN THE PACKAGING CAVITY EDGE
MACHINE D'EMBALLAGE POUR LA PREPARATION D'UN EMBALLAGE AVEC RETRAIT DANS LE BORD DE LA BARQUETTE D'EMBALLAGE

(30) Priorität: 09.02.2006 DE 102006006219; 28.04.2006 DE 102006020361
(43) Veröffentlichungstag der Anmeldung: 29.10.2008
(73) Patentinhaber: CFS Germany GmbH, 35216 Biedenkopf-Wallau (DE)
(72) Erfinder: FEISEL, Jörg, 35216 Biedenkopf (DE)
(74) Vertreter: Brosch, Oliver
(86) Internationale Anmeldenummer: PCT/EP2007/001092
(87) Internationale Veröffentlichungsnummer: WO 2007/090654

(56) Entgegenhaltungen:
- EP-A2- 0 899 209
- US-A- 2 331 472
- US-A- 3 054 679
- US-A- 3 561 057
- US-A- 3 706 174
- US-A- 3 815 322

## Beschreibung

Die vorliegende Erfindung betrifft eine Verpackungsmaschine mit einer Tiefzieh-, Füll- und Siegelstation, mit der eine Verpackungsmulde, mit einem Rücksprung in dem Verpackungsmuldenrand, in eine Kunststofffolie eingeformt, die Verpackungsmulde mit einem Verpackungsgut gefüllt und anschließend in einer Siegelebene eine Oberfolie an den Verpackungsmuldenrand gesiegelt wird, wobei in das Siegelwerkzeug ein Schneidwerkzeug Integriert ist.

Verpackungsgüter, insbesondere Lebensmittel, werden heutzutage in der Regel in Kunststoffverpackungen, die aus einer Verpackungsmulde und einer darauf gesiegelten Oberfolie bestehen, dargereicht, um deren Haltbarkeit zu erhöhen. Dabei ist es das Bestreben der Verpackungsindustrie, derartige Verpackungen mit möglichst wenig Material, d. h. mit möglichst dünnen Folien, herzustellen. Maschinen zur Herstellung von Verpackungen oder Verpackungsmulden sind beispielsweise aus der US 3.706,174 US 3.561,057, US 3, 815,322, US 3,054,679. US 2,331,472, EP 0 899 209. Um dennoch eine hinreichende Stabilität der Verpackungen zu erzielen, werden Versprünge, wie Sicken und dergleichen in die Wände oder den Rand der Verpackungsmulde integriert, Insbesondere bei Verpackungsmaschinen, die eine Tiefzieh- eine Füll- und eine Siegelstation aufweisen, tritt jedoch dabei das Problem auf, dass die Deckelfolie im Bereich der Rücksprünge in dem Verpackungsmuldenrand nicht mit der Verpackungsmulde verbunden ist, was zum einen unanschaulich ist, darüber hinaus dazu führt, dass sich die Deckelfolie leichter von der Verpackungsmulde löst und unhygienisch ist, weil sich beispielsweise Lebensmittelreste zwischen dem Verpackungsmuldenrand und der Oberfolie ansammeln können.

Es war deshalb die Aufgabe der vorliegenden Erfindung, eine Verpackungsmaschine mit einer Tiefzieh-, Füll- und Siegelstation zur Verfügung zu stellen, mit der eine Verpackungsmulde, mit einem Rücksprung in dem Verpackungsmuldenrand, herstellbar ist, die die Nachteile des Standes der Technik nicht aufweist.

Gelöst wird die Aufgabe mit einer Verpackungsmaschine gemäß Patentanspruch 1.

Es war für den Fachmann überaus erstaunlich und nicht zu erwarten, dass es mit der erfindungsgemäßen Verpackungsmaschine gelingt, eine Verpackungsmulde in eine Kunststofffolie einzuformen, diese Verpackungsmulde mit einem Verpackungsgut zu füllen und anschließend mit einer Deckelfolie so zu versiegeln, dass diese keine ungewollt nicht versiegelten Bereiche aufweist. Dadurch ist die Verpackung sehr viel ansehnlicher als gleichartige Verpackungen, die gemäß dem Stand der Technik hergestellt wurden und darüber hinaus ist es ausgeschlossen, dass sich die Deckelfolie ungewollterweise von der Verpackungsmulde löst und dass sich Lebensmittel zwischen der Deckelfolie und dem Verpackungsmuldenrand ansammelt.

Erfindungsgemäß weist die Verpackungsmaschine eine Tiefzieh-, Füll- und Siegelstation auf. In der Tiefziehstation wird eine Verpackungsmulde in eine plane Folie durch Tiefziehen, beispielsweise mit einem Stempel, Überdruck und/oder Unterdruck in eine vorgegebene Form tiefgezogen. Erfindungsgemäß weist diese Verpackungsmulde in ihrem vertikalen Rand einen Rücksprung auf, um die Verpackung insgesamt, insbesondere jedoch den Randbereich, stabiler gestalten zu können. Dieser Rücksprung wird beim Tiefziehen in die Kunststofffolie eingeformt. Die so hergestellte Verpackungsmulde wird sodann mit einem Verpackungsgut, insbesondere einem Lebensmittel, befüllt. Danach wird die gefüllte Verpackungsmulde mit einer Oberfoliefolie abgedeckt und im Randbereich versiegelt.

Erfindungsgemäß ist in das dafür benötigte Siegelwerkzeug ein Schneidwerkzeug integriert, mit dem lediglich die Oberfolie der Jeweiligen Verpackung von der Kunststofffolienoberbahn abgetrennt wird.

Vorzugsweise ist das Schneidwerkzeug im Übergangsbereich zwischen der Siegelebene und dem Rücksprung angeordnet. Weiterhin bevorzugt ist das Schneidwerkzeug am Umfang des Siegelwerkzeuges angeordnet. Beide Ausführungsformen haben den Vorteil, dass die Deckelfolie unmittelbar am Umfang des gesiegelten Bereiches abgeschnitten wird, so dass zwischen dem Rand der Siegelung und dem Rücksprung kein ungesiegelter Bereich besteht, der dazu führen kann, dass sich die Oberfolie leichter ablöst bzw. dass sich darin Lebensmittelreste ansammeln, die ein Hygieneproblem darstellen. Vorzugsweise ist jedes Schneidwerkzeug separat angetrieben.

Vorzugsweise erfolgt das Siegeln vor, nach oder gleichzeitig mit dem Schneiden der Oberfolie.

Weiterhin bevorzugt wird die Verpackungsmulde so hergestellt, dass die Siegelebene oberhalb der Transportebene der Kunststofffollenbahn, aus der die Verpadkungsmulde hergestellt wird, liegt. Diese Ausführungsform der vorliegenden Erfindung hat den Vorteil, dass in dem anschließenden Siegelverfahren die Siegelebene für das Siegelwerkzeug besser zugänglich ist und die Oberfolie von dem Schneidwerkzeug durchtrennt werden kann, ohne dass die Verpackungsmulde dabei beschädigt wird.

Im Folgenden wird die Erfindung anhand der Figuren 1 bis 3c erläutert. Diese Erläuterungen sind lediglich beispielhaft und schränken den allgemeinen Erfindungsgedanken nicht ein.
Figur 1 zeigt die erfindungsgemäße Verpackungsmaschine.
Figuren 2a bis 2b zeigen die Tiefziehstation der erfindungsgemäßen Verpackungsmaschine.
Figur 2c zeigt eine Veipackungsmulde, die in der Tiefziehstation gemäß Figuren 2a bis 2b hergestellt wird.
Figuren 3 a bis 3c zeigen das Evakuieren, Siegeln und Schneiden der Oberfolie.

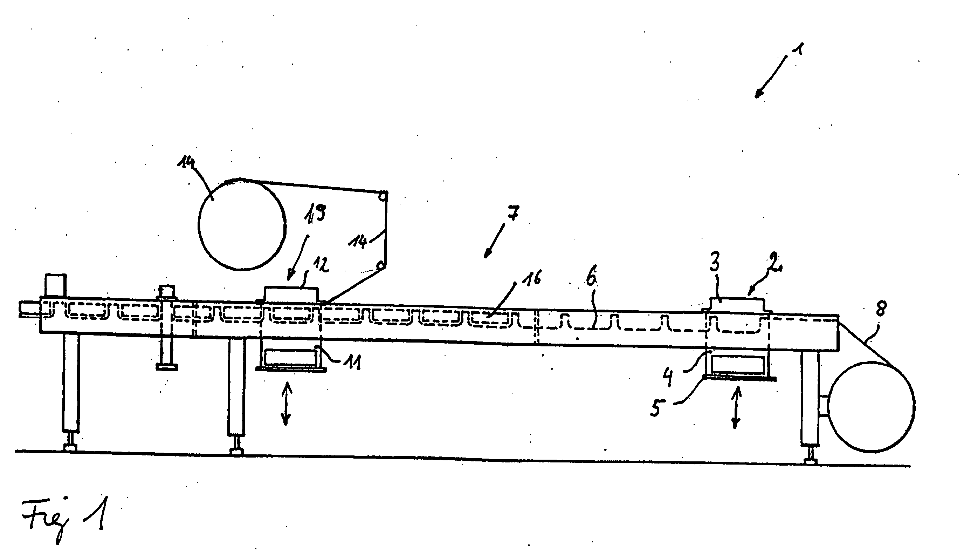

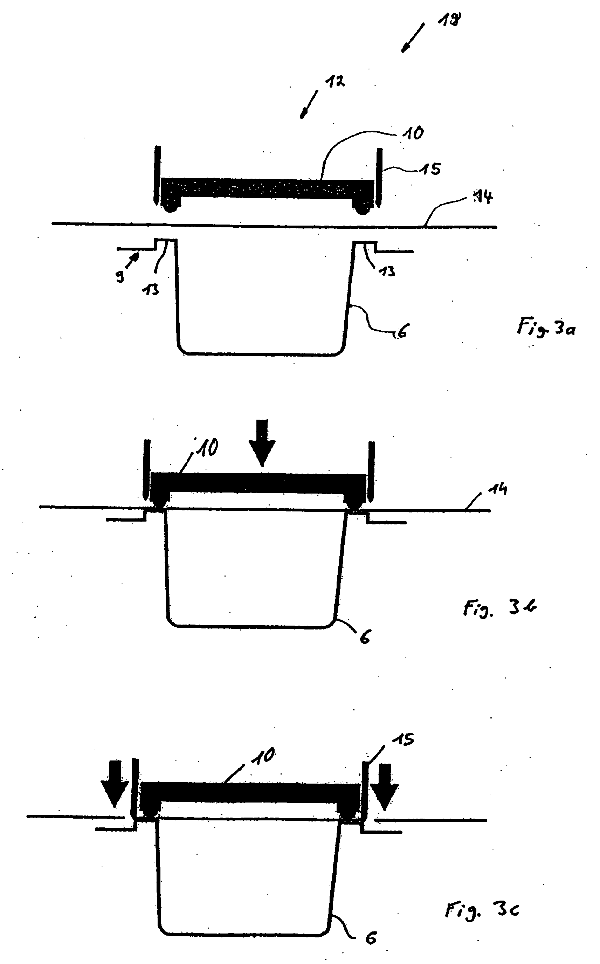

Figur 1 zeigt die erfindungsgemäße Verpackungsmaschine 1, die eine Tiefziehstation 2, eine Füllstatlon 7 sowie eine Siegelstation 19 aufweist Eine Kunststofffolienbahn 8, die sogenannte Unterbahn, wird vorzugsweise taktweise entlang der erfindungsgemäßen Verpackungsmaschine von rechts nach links in der sogenannten Folienebene transportiert. In der Tiefziehstation 2, die ein Oberwerkzeug 3 und ein Unterwerkzeug 4, das die Form der herzustellenden Verpackungsmulde aufweist, besteht, werden die Verpakungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolie auf die Verpackungsmulde gesiegelt und wie anhand der Figuren 3a bis 3c erläutert, die jeweilige Verpackung aus der Oberfolienbahn abgetrennt. Im weiteren Verlauf der Verpackungsmaschine werden auch die fertiggestellten Verpackungen aus der Unterfolie 8 vereinzelt.

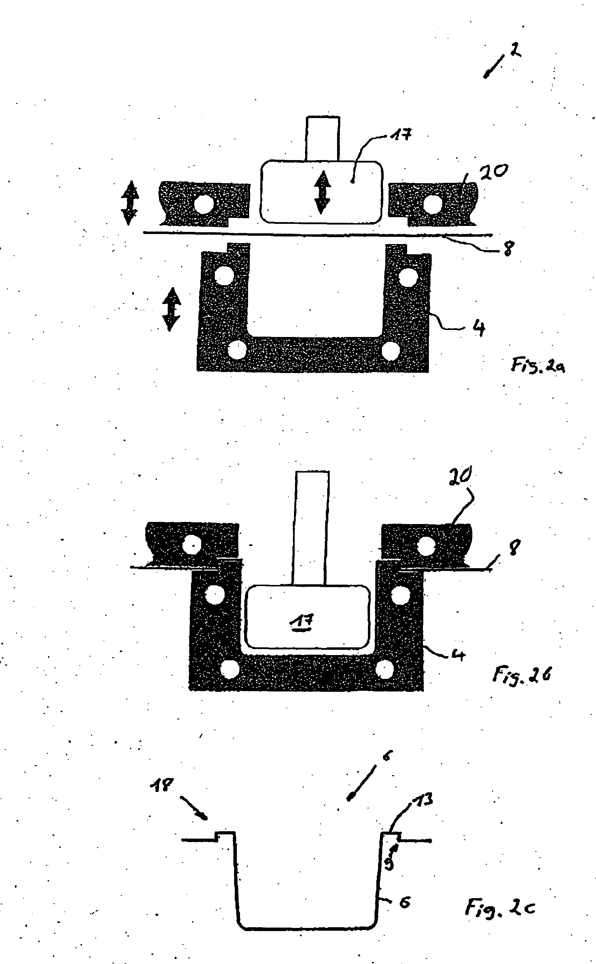

Figur 2 a zeigt Details der Formstation 2. Das Oberwerkzeug 3 weist unter anderem einen Klemmrahmen 20 und einen Umformstempel 17 auf, während das Unterwerkzeug 4 im Wesentlichen aus der Tiefziehform besteht. Die Kunststofffolie 8 wird taktweise entlang der sogenannten Folienebene, die sich senkrecht zur Papierebene zwischen den Komponenten des Oberwerkzeuges 2 und des Unterwerkzeuges 4 erstreckt, transportiert.

In Figur 2b ist die Verformung der Kunststofffolie 8 in die jeweilige Verpackungsmulde dargestellt, die vor dem Verformen bis zur Plastifizierungstemperatur erwärmt wurde. Zunächst einmal wird die Kunststofffolie 8 zwischen dem Klemmrahmen 20 und dem Unterwerkzeug 4 eingeklemmt und dabei die Siegelebene 13 und damit der Rücksprung 9 in die Kunststofffolie eingeformt. Der Fachmann erkennt, dass sich der Rücksprung 9 in der Folienebene, d. h. in der Transportebene der Kunststofffolie 8 befindet, während sich die Siegelebene 13 nach oben aus der Folienebene erstreckt. Nachdem die Kunststofffolie 8 festgeklemmt worden ist, wird mit einem Umformstempel 17, der wie durch den Doppelpfeil dargestellt, heb- und senkbar ist, die Verpackungsmulde 6 in die Follenbahn eingeformt. Gegebenenfalls wird die Verformung durch einen Unterdruck, der im Bereich des Unterwerkzeuges anliegt oder durch einen Überdruck, der im Oberwerkzeug anliegt, verstärkt.

In Figur 2c ist die aus dem Tiefziehvorgang gemäß den Figuren 2a und 2b resultierende Verpackungsmulde 6 dargestellt. Diese Verpackungsmulde weist in ihrem Randbereich 18 eine Siegelebene 13 auf, an die sich umfänglich ein Rücksprung 9 anschließt.

In den Figuren 3a bis 3c ist das Siegeln der Oberfolie 14 an die Verpackungsmulde 6 dargestellt. Die Siegelstation 10 weist ein Oberwerkzeug 12 auf, das im Wesentlichen aus einem Siegelrahmen 10 und einem Messer 15 besteht, das sich um den gesamten Umfang des Siegelrahmens 10 erstreckt. Mit dem Messer 15 wird die Oberfolie 14, wie später dargestellt wird, vor, nach oder während des Siegelns durchtrennt. Sowohl der Siegelrahmen 10 als auch das Messer 15 sind absenkbar bzw. anhebbar, wobei die jeweilige Bewegung im Wesentlichen unabhängig von einander erfolgt. Die kann-beispielweise durch einen Antrieb erfolgen, wobei der Siegelrahmen federnd an dem Antrieb angeordnet ist und sobald der Siegelrahmen mit einem hinreichenden Druck an einem nicht dargestellten Gegenstück anliegt, das Messer 15 in Richtung der Oberbanh 14 gedrückt wird und diese durchtrennt. Der Rand der Siegelebene wirkt dabei mit dem Messer zusammen.

In Figur 3a ist zunächst einmal das Evakuieren bzw. der Gasaustausch innerhalb der Verpackungsmulde dargestellt. Dieser erfolgt, bevor die Oberfolie 14 auf die Verpackungsmulde 6 aufgelegt wird.

Nachdem das Evakuieren bzw. der Gasaustausch abgeschlossen ist, wird, wie in Figur 3b dargestellt, der Siegelrahmen nach unten bewegt, um das Siegeln der Oberfolie 14 an die Verpackungsmulde 6 zu vollziehen. Dies erfolgt in der Regel durch Temperatur- und Druckeinfluß, indem der vorgeheizte Siegelrahmen gegen die Verpackungsmulde 6 gepreßt wird. Der Fachmann weiß, dass auch im Bereich der Verpackungsmulde 6 ein Siegelrahmen angeordnet ist, der als Wiederlager für den Siegelrahmen 10 dient.

Die Oberfolie kann gegebenenfalls auch unmittelbar vor dem Siegeln getrennt werden.

Sobald die Oberfolie 14 an die Verpackungsmulde 6 gesiegelt worden ist oder gleichzeitig wird wie durch den Pfeil in Figur 3c dargestellt, das Messer nach unten gefahren und durchtrennt die Oberfolie unmittelbar im Bereich des Rücksprungs in dem Verpackungsmuldenrand.

Dadurch, dass das Messer 15 Im Bereich des Rücksprungs die Oberfolie durchtrennt und der Siegelrahmen 10 die Oberfolie im Bereich der Siegelebene vollständig in der Siegelebene 13 mit der Verpackungsmulde verschweißt, treten im Bereich der Siegelebene keinerlei ungesiegelte Bereiche auf, in denen sich beispielsweise Taschen, in denen sich Lebensmittelreste ansammeln, bilden können.

### Bezugszeichen

- 1: Verpackungsmaschine
- 2: Tiefziehstation
- 3: Oberwerkzeug der Tiefziehstation
- 4: Unterwerkzeug der Tiefziehstation
- 5: Hubtisch der Tiefziehstation
- 6: Verpackungsmulde
- 7: Füllstation
- 8: Unterfolienkunststoffbahn
- 9: Rücksprung im Verpackungsmutdenrand
- 10: Stegetrahmen
- 11: Unterwerkzeug der Siegelstation
- 12: Oberwerkzeug der Siegelstation
- 13: Siegelebene
- 14: Oberfolie
- 15: Schneidwerkzeug in der Siegelstation
- 16: Verpackungsgut
- 17: Umformstempel
- 18: Verpackungsmuldenrand
- 19: Siegelstation
- 20: Klemmrahmen

## Patentansprüche

1. Verpackungsmaschine (1) mit einer Tiefzieh- (2), Füll- (7) und Siegelstation (19), mit der eine Verpackungsmulde (6) mit einem Rücksprung (9) in dem Verpackungsmuldenrand (18) in eine Kunststofffollenbahn (8) eingeformt, die Verpackungsmulde (6) mit einem Verpackungsgut (16) gefüllt und anschließend in einer Siegelebene (13) eine Oberfolie (14) an den Verpackungsmuldenrand (18) gesiegelt wird, wobei die Siegelung unter Druck- und Temperatureinfluss erfolgt und in das Siegelwerkzeug (10) ein Schneidwerkzeug (15) integriert ist, **dadurch gekennzeichnet, dass** die Siegelebene (13) oberhalb der Transportebene der Kunststofffollenbahn (8), aus der die Verpackungsmulde hergestellt wird, liegt und dass das Schneidwerkzeug (15) die Oberfolie der jeweiligen Verpackung von der Kunsistofffolienoberbahn (14) abtrennt.

2. Verpackungsmaschine nach Anspruch 1, **dadurch gekennzeichnet, dass** Schneidwerkzeug (15) im Übergangsbereich zwischen Siegelebene (13) und Rücksprungs (9) angeordnet ist.

3. Verpackungsmaschine nach einem der voranstehenden Ansprüche, **dadurch gekennzeichnet, dass** das Schneidwerkzeug (15) am Umfang des Siegelwerkzeugs (10) angeordnet ist.

## Claims

1. Packaging machine (1) having a swedging (2), filling (7) and sealing station (19), by way of which a packaging cavity (6) with a recess (9) in the packaging cavity edge (18) is formed into a plastic film (8), the packaging cavity (6) is filled with a packaging material (16) and, subsequently in the sealing plane (13), an upper film (14) is sealed to the packaging cavity edge (18), sealing being effected under the influence of pressure and temperature and a cutting tool (15) being integrated into the sealing tool (10), **characterized in that** the sealing plane (13) lies above the transport plane of the plastic film web (8), from which the packaging cavity is produced, and **in that** the cutting tool (15) severs the upper film of the respective packaging from the plastic film upper web (14).

2. Packaging machine according to Claim 1, **characterized in that** the cutting tool (15) is arranged in the transition region between the sealing plane (13) and the recess (9).

3. Packaging machine according to one of the preceding claims, **characterized in that** the cutting tool (15) is arranged on the circumference of the sealing tool (10).

## Revendications

1. Machine d'emballage (1) comprenant un poste d'emboutissage profond (2), un poste de remplissage (7) et un poste de scellage (19), avec laquelle une barquette d'emballage (6) avec un retrait (9) dans le bord de la barquette d'emballage (18) est formée dans une bande de feuille de plastique (8), la barquette d'emballage (6) est remplie avec un produit de remplissage (16) et ensuite, dans un plan de scellage (13), une feuille de recouvrement (14) est scellée sur le bord de la barquette d'emballage (18), le scellage s'effectuant sous l'effet de la pression et de la température, et un outil de découpage (15) étant intégré dans l'outil de scellage (10), **caractérisée en ce que** le plan de scellage (13) est situé au-dessus du plan de transport de la bande de feuille de plastique (8) dans laquelle est fabriquée la barquette d'emballage, et **en ce que** l'outil de découpage (15) sépare la feuille de recouvrement de chaque emballage de la bande de feuille de plastique (14).

2. Machine d'emballage selon la revendication 1, **caractérisée en ce que** l'outil de découpage (15) est disposé dans la région de transition entre le plan de scellage (13) et les retraits (9).

3. Machine d'emballage selon l'une quelconque des revendications précédentes, **caractérisée en ce que** l'outil de découpage (15) est disposé à la périphérie de l'outil de scellage (10).
